# EUROPEAN PATENT APPLICATION

(11) **EP 1 469 374 A1**
(43) Date of publication of application: **20.10.2004**
(21) Application number: 02716330.2
(22) Date of filing: 22.01.2002
(51) Int. Cl.: G06F 3/00, H04M 1/247

(54) **MENU ELEMENT SELECTING DEVICE AND METHOD**

(71) Applicant: FUJITSU LIMITED, Kawasaki-shi, Kanagawa 211-8588 (JP); NTT DoCoMo, Inc., Tokyo 100-6150 (JP)
(72) Inventor: TOJO, Jun FUJITSU HYPER SOFTWARE TECHNOLOGIES LTD, Yokohama-shi, Kanagawa 222-0033 (JP); SUDO, Takuma FUJITSU HYPER SOFTWARE TECHNLGIES LTD, Yokohama-shi, Kanagawa 222-0033 (JP)
(74) Representative: Hitching, Peter Matthew
(86) International application number: PCT/JP2002/000423
(87) International publication number: WO 2003/062975

(57) **Abstract**

As menu items configuring a menu page displayed in a display device of a cellular phone, facial portraits of persons with whom a predetermined function is executed can be registered.

## Description

### Technical Field

The present invention relates to a menu item selecting device and method, and, in particular, to a device and a method for selecting a specific menu item from a menu displayed on an operation page on an electric device such as a cellular phone, a personal computer or such.

### Background Art

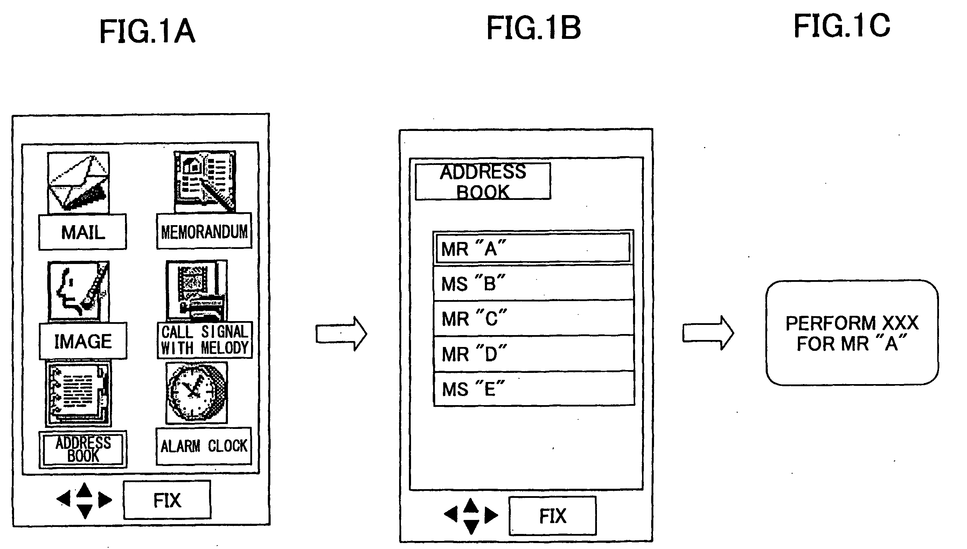

Recently, a multi-function electronic device such as a cellular phone, a personal computer or such, i.e., an electronic device having various functions within a single unit, has a function of performing a specific action for a specific person in many cases. Specifically, a cellular phone has a telephone calling function, a personal computer has an electronic mail transmission function, and further, recently, each of these devices has both the telephone calling function and the electronic mail transmission function together in many cases. In such a multi-function electronic device, a so-called menu is used for selecting a function in many cases. FIGS. 1A, 1B and 1C shows one example of the menu.

The menu shown in FIGS. 1A, 1B and 1C is an example of one displayed on a display screen (LCD display device) of a cellular phone. In this example, the menu displayed includes 'mail function', 'memorandum function', 'image registration function', 'call signal melody registration function', 'address book function' and 'alarm clock function' (see FIG. 1A). In case of performing a specific action for a desired person with the use of this menu, i.e., calling Mr. "A", for example, 'address book' button representing the above-mentioned 'address book function' is pressed first, whereby the same function is started. As a result, an 'address list' page such as that shown in FIG. 1B is displayed. Then, Mr. "A" is selected from among the address list, and a 'fix' button is pressed. After that, a predetermined phone call function is started, and thereby, it is possible to call Mr. "A".

Thus, according to the prior art, in a case where a specific action is performed on a specific person, operations are necessary, i.e., a function menu is to be first started, a relevant function is to be selected from among it, the relevant person is to be selected and is after that input, and then, the relevant action is to be started. In such a case, although specific persons for whom such an action is to be performed are limited to the some extent (on the order of a few persons) in many cases, it is necessary to pass through many steps of operations such as those mentioned above each time an action is performed on these persons.

### Disclosure of Invention

The present invention has been devised in consideration of the above-mentioned problem, and has an object to provide an device and a method for making it possible to execute an action with a relatively easy operation in case of performing the action for limited specific parties (persons) for which it is expected to perform the action frequently. It is noted that, 'action' refers to action in general, such as calling a certain person, mailing, displaying data concerning the person, or such, performed with the use of a cellular phone or such.

In order to achieve the above-mentioned object, according to the present invention, registration of information representing a specific person for whom an action is performed as a menu item is made possible. In other words, in case of using a cellular phone or such, which is an electronic device, call communication, electronic mail exchange or such, is performed with a specific person in many cases. In such a case, an operator may first imagine a specific person for whom the action is to be performed now. Accordingly, by previously registering, as a menu item, information representing the specific person himself or herself as in the present invention, it is possible to provide a user friendly operation environment, since it is not necessary for the operator to recognize, in particular, the function.

Furthermore, by enabling registration also of a function as a menu item as well as registration of a person as a menu item as mentioned above, a user comes to be able to register any menu configuration depending on his or her usage type. That is, the user may register specific two persons as menu items, three functions as other menu items, and as a result, register total 5 items of menu. Alternatively, it is also possible that a user finally registers six specific persons as menu items, without registering any functions as menu items. Thus, it is possible to provide a system which can be flexibly applied to the usage type of the particular user or, to a case where the same user changes his or her usage type as time goes on.

### Brief Description of Drawings

FIGS. 1A, 1B and 1C illustrate a manner of menu item selection in one example of the prior art;
FIG. 2 illustrates a concept of a manner of menu item selection operation in one embodiment of the present invention;
FIG. 3 shows a block diagram illustrating a general configuration of a cellular phone to which a menu selecting method according to the embodiment of the present invention is applicable;
FIG. 4 shows an operation flow of menu display operation in the menu selecting method according to the embodiment of the present invention;
FIG. 5 shows a configuration of a menu configuration file used in the menu item selecting method according to the embodiment of the present invention (#1);
FIG. 6 shows a configuration of a menu configuration file used in the menu item selecting method according to the embodiment of the present invention (#2);
FIG. 7 shows a configuration of an icon data file used in the menu item selecting method according to the embodiment of the present invention;
FIGS. 8A, 8B, 8C and 8D illustrate a process of menu item registration according to the menu item selecting method in the embodiment of the present invention (#1) ;
FIGS. 9A, 9B, 9C and 9D illustrate a process of menu item registration according to the menu item selecting method in the embodiment of the present invention (#2);
FIGS. 10A, 10B, 10C and 10D illustrate a process of menu item registration according to the menu item selecting method in the embodiment of the present invention (#3) ;
FIG. 11 shows a flow chart illustrating a flow of menu item selection operation according to the menu item selecting method in the embodiment of the present invention (#1) ;
FIG. 12 illustrates a person information storage file used in the menu item selecting method according to the embodiment of the present invention;
FIG. 13 shows a flow chart illustrating a flow of menu item selection operation according to the menu item selecting method in the embodiment of the present invention (#2) ;
FIG. 14 shows a flow chart illustrating a flow of menu item selection operation according to the menu item selecting method in the embodiment of the present invention (#3);
FIG. 15 shows a flow chart illustrating a flow of menu item selection operation according to the menu item selecting method in the embodiment of the present invention (#4) ;
FIG. 16 shows a flow chart illustrating a flow of menu item selection operation according to the menu item selecting method in the embodiment of the present invention (#5) ;
FIG. 17 illustrates an actual example of menu item selection operation in the menu item selecting method according to the embodiment of the present invention (#1) ;
FIG. 18 illustrates an actual example of menu item selection operation in the menu item selecting method according to the embodiment of the present invention (#2);
FIGS. 19A, 19B and 19C illustrates an actual example of menu item selection operation in the menu item selecting method according to the embodiment of the present invention (#3);
FIGS. 20A, 20B and 20C illustrates an actual example of menu item selection operation in the menu item selecting method according to the embodiment of the present invention (#4);
FIGS. 21A, 21B and 21C illustrates an actual example of menu item selection operation in the menu item selecting method according to the embodiment of the present invention (#5);
FIGS. 22A, 22B and 22C illustrates an actual example of menu item selection operation in the menu item selecting method according to the embodiment of the present invention (#6);
FIG. 23 shows a perspective view of a notebook-type personal computer to which the present invention is applicable; and
FIG. 24 shows a perspective view of a desktop-type personal computer to which the present invention is applicable.

### Best Mode for Carrying Out the Invention

An embodiment of the present invention will now be described based on drawings.

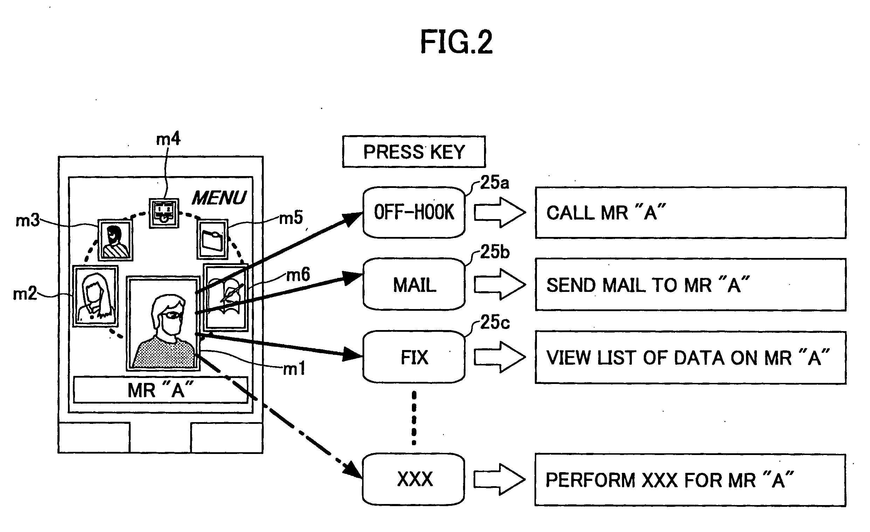

FIG. 2 shows a concept of a manner of using a registration menu according to a menu item selecting method according to an embodiment of the present invention. In this case, description is made for an example of a cellular phone.

As shown, according to the embodiment of the present invention, facial portraits of persons are used directly as a menu, and, in case where an 'off-hook' key is pressed in a state in which an item of a facial portrait of Mr. A in the menu page is selected for example, phone call operation for Mr. A is automatically started; electronic mail transmission operation for Mr. A is automatically started in case where a 'mail' key is pressed; 'information of Mr. A' previously stored is automatically displayed on a screen in case where a 'fix' key is pressed.

By configuring so, the operator can recognize a target of operation rather as a 'person' than as a 'function'. For example, as in the above-mentioned example, in case where the operator wishes to call Mr. A or mail Mr. A, the operator rather has a consciousness for the person, 'Mr. A', as a leading part than a consciousness for a 'function' such as a phone call function or such. Accordingly, by providing a configuration in which, as according to the present invention, a 'person' is added to a menu, and an operation can be started from selection of the 'person', it is possible to provide operation process closer to a flow of an operator's consciousness, and thereby, it is possible to provide a man-machine interface which is more user friendly. What is actually displayed on a display device in case where persons registered in a menu are displayed is not limited to facial portraits (photographs) as in this example. Any other configurations may be applied as long as persons can be identified thereby, i.e., portrait sketches, identification marks, simple name plates, or such, for example.

A configuration of the embodiment of the present invention is described next more specifically.

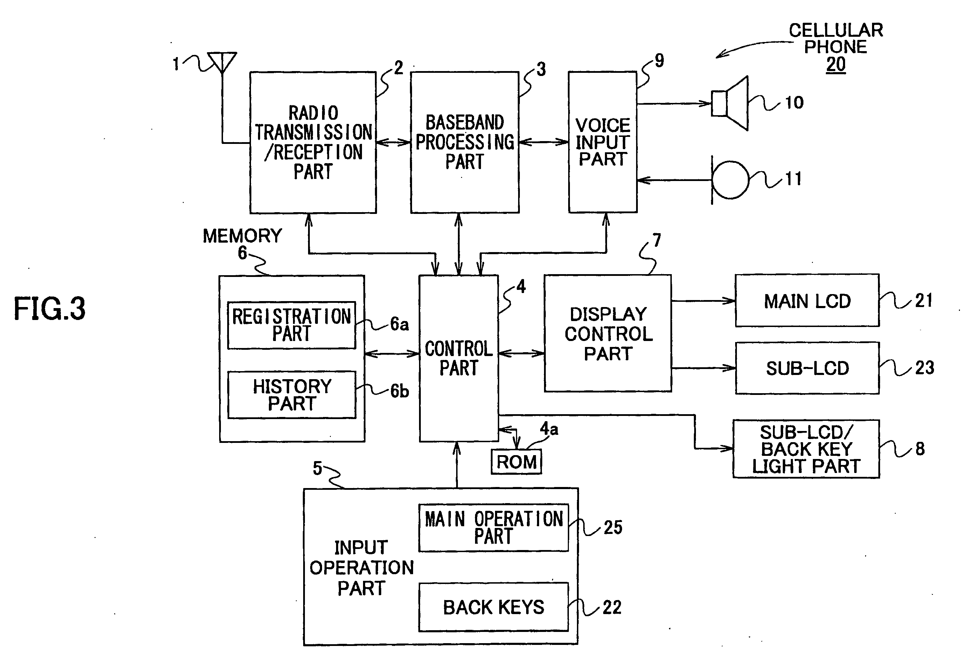

FIG. 3 shows an internal block diagram of a cellular phone 20 to which a menu item selecting method according to the embodiment of the present invention is applicable.

The cellular phone 20 includes an antenna 1 for transmitting and receiving a signal to and from a base station, a radio transmission/reception part 2 processing a radio frequency signal transmitted/received via the antenna 1 so as to convert it into a voice signal or an image signal, or to perform the inverse signal conversion, a baseband processing part 3 and a voice input/output part 9, a speaker 10 and a microphone 11 performing input and output of the voice signal, a display control part 7 performing control of display of the image signal, a main LCD (liquid crystal display device) 21 and a sub-LCD 23, an input/output operation part 5 including a main operation part including various types of keys for a user to input operation and back keys 22, a memory 6 including a registration part 6a for registering phone numbers, mail addresses, URLs, or such and a history part 6b storing a history of operation, a control part 4 performing total management and control of each of the above-mentioned respective parts, and a ROM 4a storing various types of data described later.

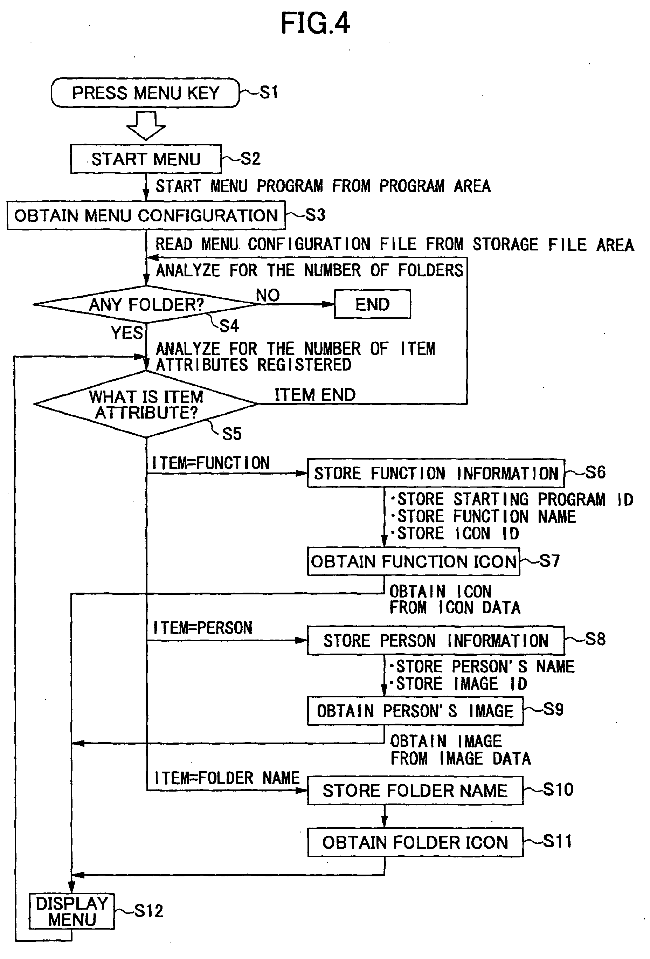

When a 'menu' key in the main operation part 25 of the input operation part 5 of the cellular phone 20 is pressed by the operator, a rotary menu such as that shown at the left end of FIG. 2 is displayed on a screen of the main LCD 25 shown in FIG. 3 for example as described above. FIG. 4 shows an operation flow of the cellular phone 20 performed until such a menu page is displayed.

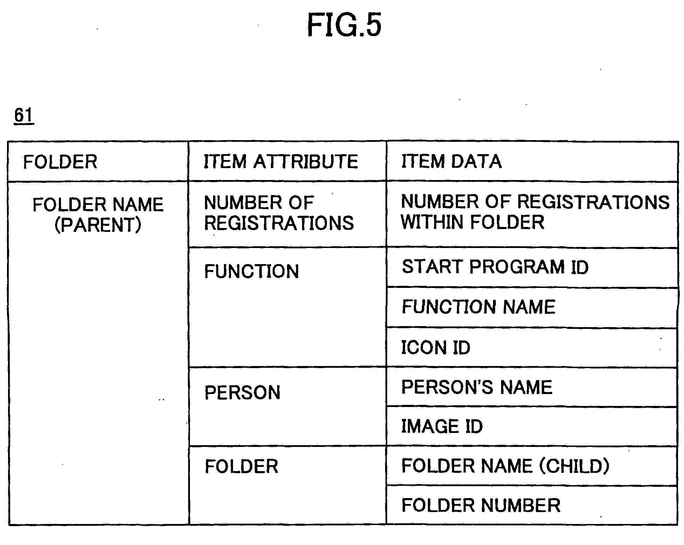

In FIG. 4, in Step S1, when the above-mentioned 'menu' key is pressed by the operator, this operation input is received by the control part 4 in Step S2, and the control part 4 starts menu starting operation. Specifically, in Step S3, menu configuration acquisition operation is performed first. That is, the control part 4 reads menu configuration data from a menu configuration file 61 (see FIG. 5) previously stored in the registration part 6a of the memory 6.

The menu configuration file 61 is configured in folder units, as shown in FIG. 5, and, for each folder, a folder name for identifying the folder itself, and also, the number of registering of menu items, as well as 'function', 'person' and 'folder' (child folder) are registered as item attributes. Further, as shown, for the item of 'function', 'starting program ID' of a program for starting the function, 'function name' and 'icon ID' of an icon image used when the item is displayed on the screen, are registered. For the item of 'person', 'person's name' and 'image ID' of a facial portrait of the person are registered. For the item of 'folder', 'folder name' and 'folder number' for identification are registered. It is noted that the above-mentioned 'image ID' of the facial portrait of the person is stored in a 'person information storage file' (registered in the registration part 6a in the memory 6) as will be described later.

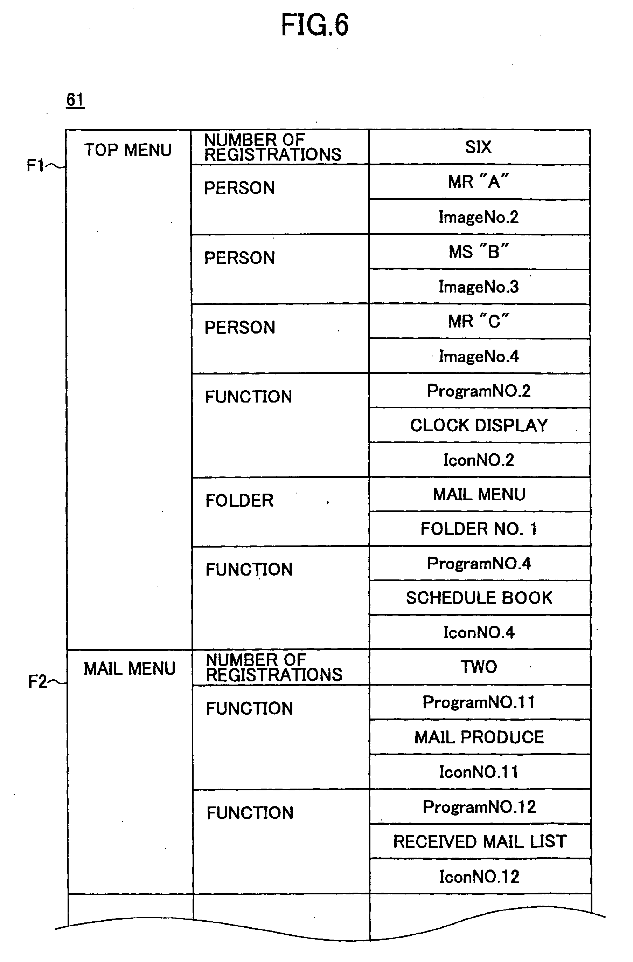

FIG. 6 shows an example thereof. As shown, a folder F1 having a name of 'top menu' has six items registered therein, and the folder contains the items, as shown, i.e., persons Mr. A, Ms. B and Mr. C (corresponding to menu items m1, m2 and m3, respectively, shown in FIG. 2), 'clock display' (corresponding to the menu item m4) as a function, 'mail menu' (corresponding to the menu item m5) as a folder, and a 'schedule book' (corresponding to the menu item m6) as a function. Also, in the above-mentioned folder 'mail menu' F2, two items, i.e., functions of 'mail production' and 'received mail list' are registered.

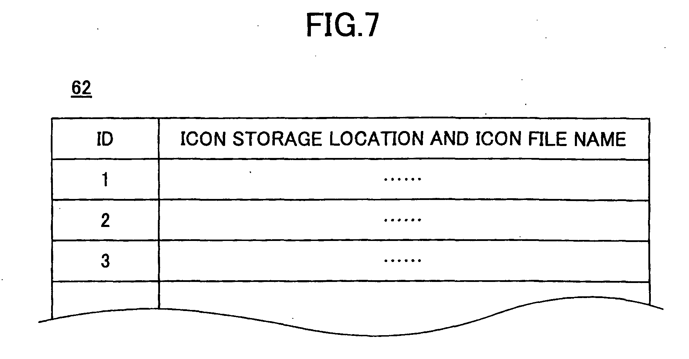

Returning to FIG. 4, in Step S4, the control part 4 analyses each of the above-mentioned folders read out from the registration part 6a of the memory 6. Specifically, in Step S5, an attribute of each item stored in the folder is determined. Then, when the attribute of the item is determined as being the 'function' as a result, 'starting program ID', 'function name' and 'icon ID', which are item information thereof, are read out, and then are written in a predetermined address of a RAM which the control part 4 has therein. Then, in Step S7, with regard to an icon identified by the above-mentioned icon ID, the control part 4 reads an icon storage location and an icon file name from an icon data file 62 (see FIG. 7). Then, according to the thus-read information, the control part 4 obtains information of the icon (image information), and displays it as menu items (m4 and m6) on the menu page (Step S12) .

On the other hand, when the item attribute occurring in Step S5 is the 'person', the control part 4 reads out the above-mentioned 'person's name' and 'image ID' from the menu configuration file 61, and writes them in a predetermined address of the above-mentioned RAM in Step S8. Then, in Step S9, with regard to image information identified by the above-mentioned image ID, the control part 4 reads a storage location and a corresponding image file from the above-mentioned 'person information storage file', and, according to the thus-read information, the control part 4 reads the relevant image information from the ROM, which image information thus read is then also displayed as menu items (m1, m2 and m3) in Step S12.

When the item attribute occurring is the 'folder' (child folder), the control part 4 writes the 'folder name' (child folder name) in the RAM (Step S10), reads a folder icon image from the ROM and displays it on the menu page as a menu item (m5), in Step S12.

Thus, the menu page such as that shown at the left end of FIG. 2 is displayed on the main LCD 21 by means of the display control part 7.

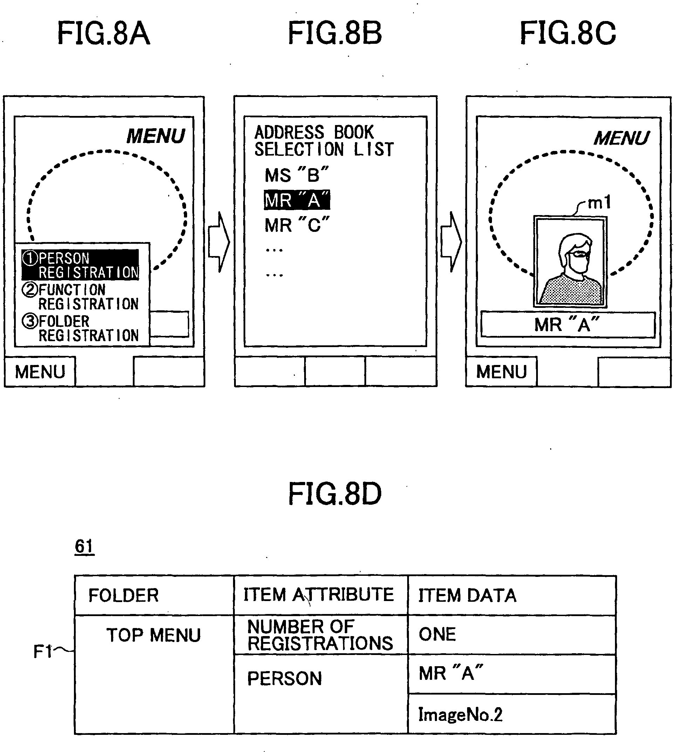

Menu registration operation according to the menu item selecting method according to the embodiment of the present invention is described next based on FIGS. 8A through 10D.

First, when the operator performs predetermined menu registration start input operation by means of the main operation part 25 of the cellular phone 20, an initial page shown in FIG. 8A is displayed on the main LCD 21. Then, when operation of selecting an item '① person registration' displayed in this state is performed by the operator, an 'address book selection list' shown in FIG. 8B is displayed. Then, when the operator performs operation of selecting 'Mr. A' from the displayed list for example, a facial portrait of Mr. A is displayed as shown in FIG. 8C. This display of the facial portrait is achieved as a result of a predetermined image display program stored in the ROM being executed by the control part 4 and thus a relevant image file ImageNo.2 (see FIG. 6) being read out from the ROM with the use of the above-mentioned 'person information storage file'. Thus, menu registration for the person 'Mr. A' is completed. As a result, as shown in FIG. 8D, in the above-mentioned menu configuration file 61, the name of Mr. A and the above-mentioned relevant image file ID of the facial portrait are registered in the folder F1 (top menu).

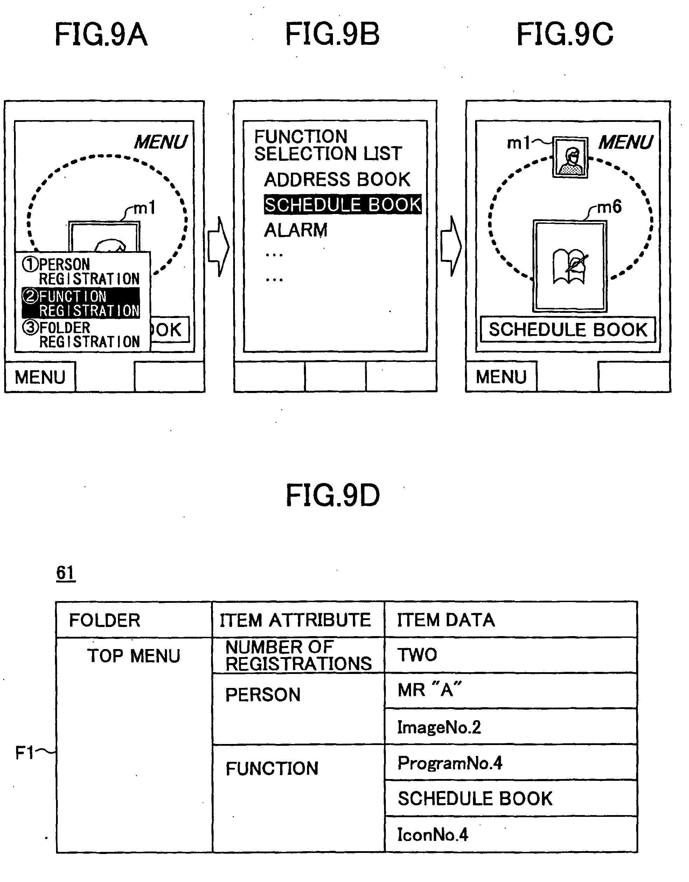

When the item of 'function' is registered, as shown in FIGS. 9A, 9B, 9C and 9D, by performing operation of selecting '② function registration' (FIG. 9A), a 'function selection list' shown in FIG. 9B is displayed. Then, by performing operation of selecting a 'schedule book' item therefrom, registration of the 'schedule book' function is completed. As a result, as shown in FIG. 9D, in the above-mentioned menu configuration file 61, as a subsequent item in the folder F1 (top menu), the relevant function starting program ID mentioned above, the function name and the relevant icon ID mentioned above are registered.

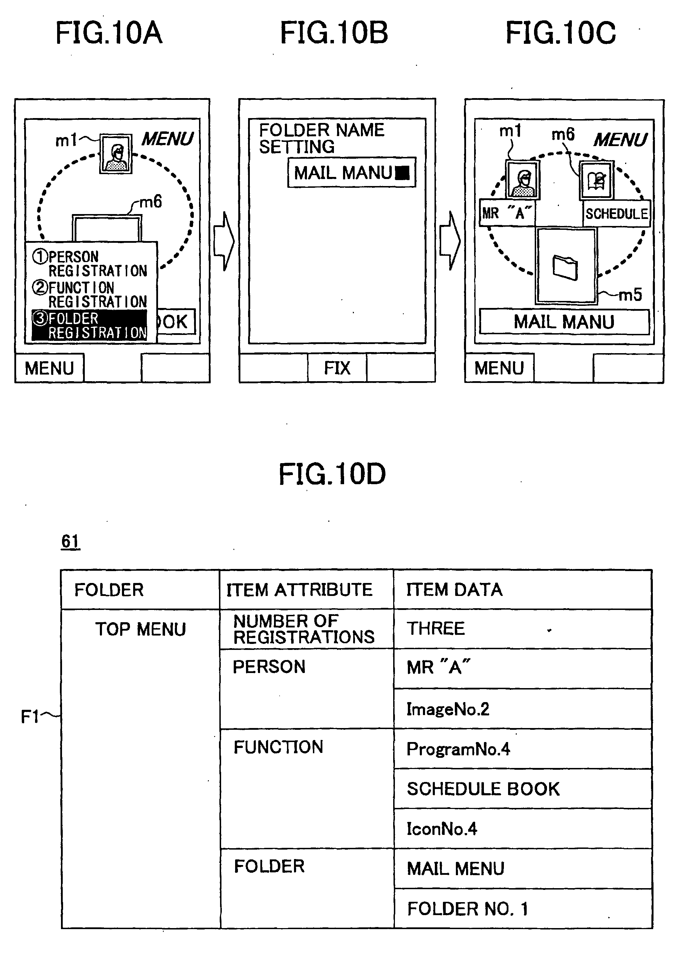

Similarly, in case of registering the item of 'folder', as shown in FIGS. 10A, 10B, 10C and 10D, by performing operation of selecting '③ folder registration' (FIG. 10A), a page of 'folder name setting' shown in FIG. 10B is displayed. Then, by inputting a desired folder name in the box by key input operation, registration of the function 'folder' is completed. As a result, as shown in FIG. 10D, in the above-mentioned menu configuration file 61, as a further subsequent item in the folder F1 (top menu), the folder name and the relevant folder number are registered.

The program for starting each function of the cellular phone, data of the 'icon ID' of an icon image used when each item is displayed, the 'icon data file', the 'address book selection list', the 'function selection list', the 'folder name setting' page, and so forth, are stored in the ROM 4a shown in FIG. 3, and are read by the control part 4 as the necessity arises.

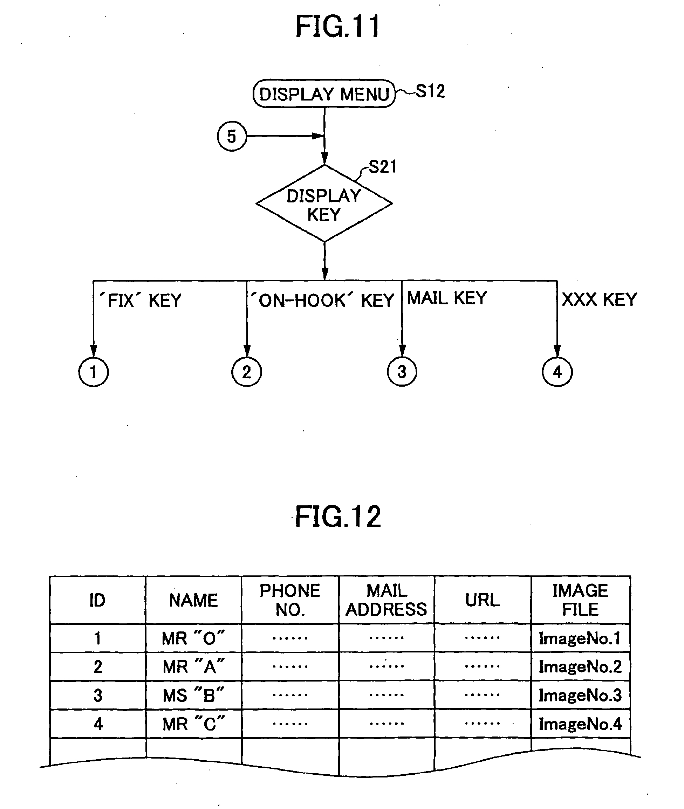

Operation of the control part 4 in the cellular phone 20 in a case where a desired action is started from a state in which the menu page is displayed such as that shown in FIG. 2 (in Step S12 in FIG. 4 and FIG. 11) is described next.

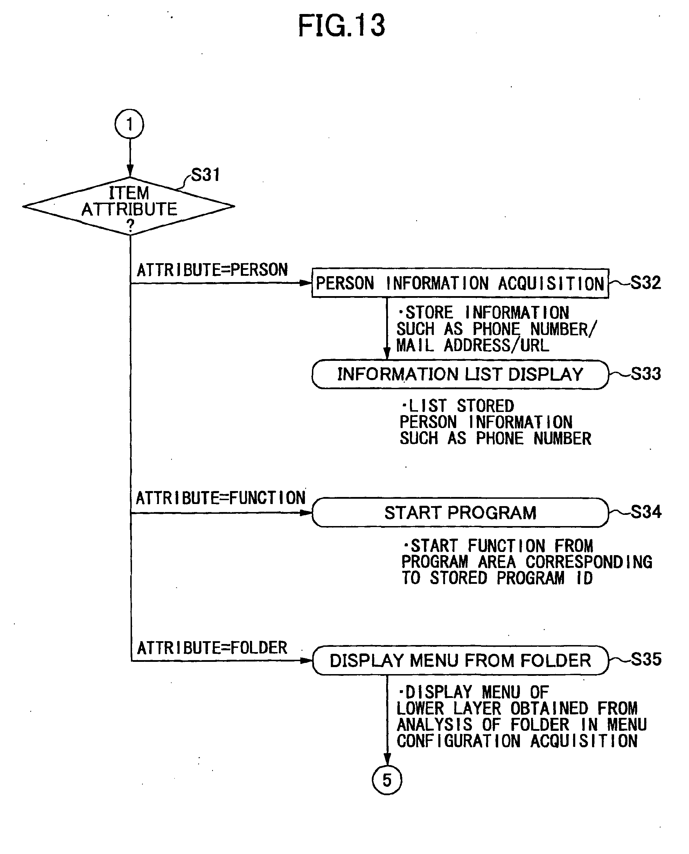

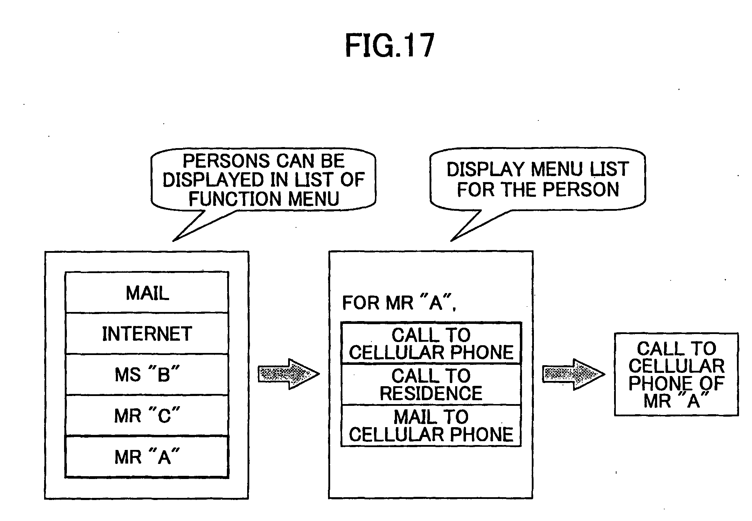

First, in Step S21 in FIG. 11, key operation input made on the main operation part 25 is determined. As a result, in a case where the 'fix' key has been pressed, an attribute of an item (menu item) which is in a selected state at this time is determined in Step S31 in FIG. 13. As a result, when the relevant item is the 'person' (for example, Mr. A), information concerning the person is read out from the 'person information storage file' in Step S32. It is noted that, in this person information storage file, as shown in FIG. 12 for example, a name, a phone number, a mail address, an URL, a facial portrait image file ID and so forth are registered for each person, and this file is stored in the registration part 6a in the memory 6. This file is one previously stored as a result of the operator operating the main operation part 25 of the cellular phone 20. Returning to FIG. 13, in Step S33, based on respective types of the information concerning the specific person thus obtained, functions (actions) concerning the information are determined, and are displayed as a list. For example, as shown in FIG. 17, in case where the personal information of Mr. A includes a phone number of a cellular phone, a phone number of the residence and a mail address of the cellular phone, actions with respect thereto are listed up, and are displayed. The operator may select a desired action therefrom, and thereby, the control part 4 executes the actual action in response to this selection operation. In the example of FIG. 17, 'call to cellular phone' is selected, and thus, operation of calling for the phone number of the cellular phone of Mr. A is executed. However, it is not necessary to be limited to the example shown in FIG. 17, and any actions may be set. For example, a list of URLs concerning the relevant person may be displayed.

In Step S31, when the item attribute is the 'function', the above-mentioned function starting program registered as an item of the relevant folder is started (Step S34).

When the item attribute is the 'folder' (child folder) in Step S31, the contents of the relevant folder are analyzed, and a relevant menu is displayed (in the example of FIG. 6, the two items, i.e., 'mail production' and 'received mail list display' are displayed).

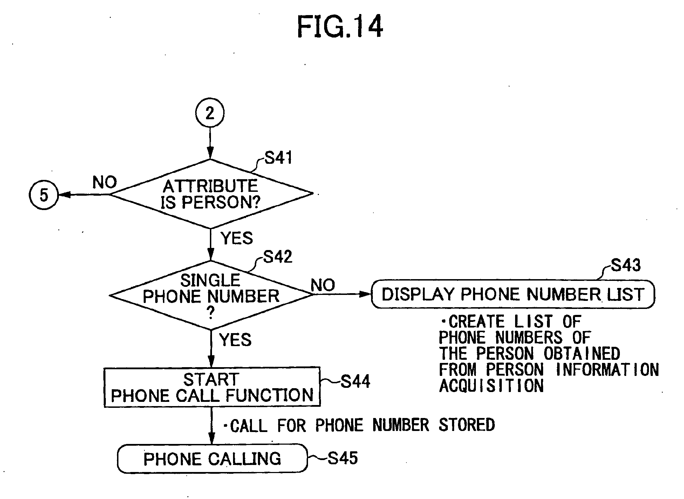

Further, when the 'off-hook' key is pressed in Step S21, the attribute of the item which is in a selected state when the key is pressed is determined in Step S41 in FIG. 14. Then, when the determination result is not the 'person', since it is determined that the relevant operation is not an effective key operation, the operation flow returns to Step S21, and then, a subsequent key operation is waited for.

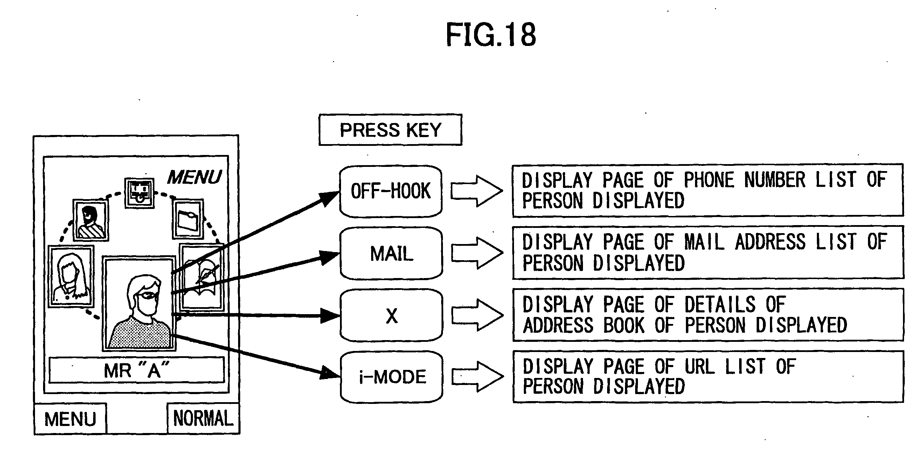

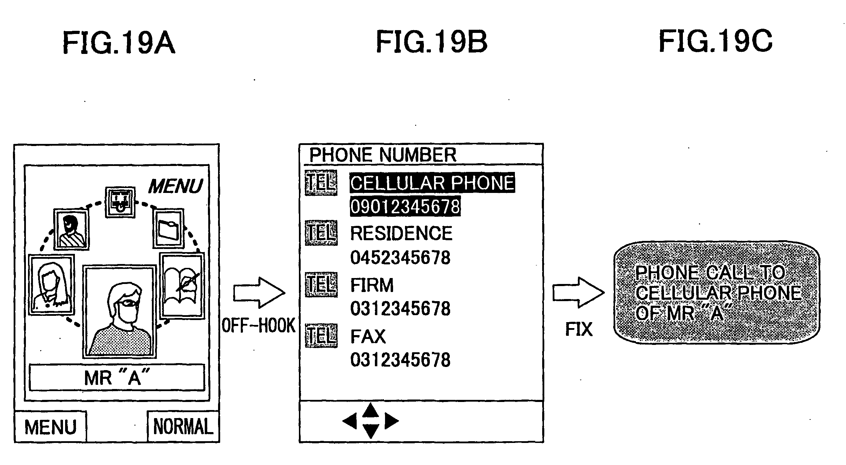

When the item attribute is the 'person' in Step S41, the phone number of the relevant specific person is read out from the person information storage file shown in FIG. 12, and it is determined whether or not the number of the registered phone numbers is one in Step S42. When the result thereof is more than one, a list of the registered phone numbers for the relevant specific person is displayed on the main LCD 21 in Step S43. A flow at the top of FIG. 18 and a flow shown in FIGS. 19A, 19B and 19C show an operation flow in this case. That is, the list such as that shown in FIG. 19B is displayed, and, as a result of operation of selecting a desired phone number being performed in this state (in the state in which the phone number of the cellular phone of Mr. A is selected, in the example of the figures), a function of calling for the cellular phone of Mr. A is started. When the number of registered phone numbers is one as a result of the determination in Step S42, a function of calling for that phone number is started. As a result, electric wave is transmitted to the base station by means of the baseband processing part 3 and the radio transmission/reception part 2, and thus, operation of calling for the relevant phone number is performed.

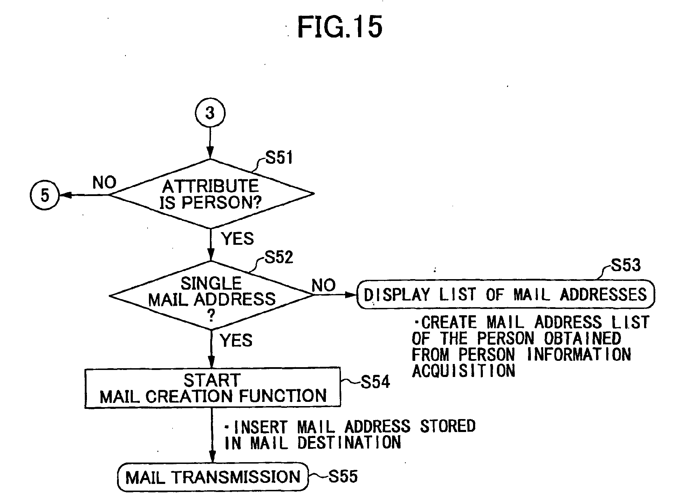

In a case where the 'mail' key is pressed in Step S21, the attribute of an item which is in a selected state when the key is pressed is determined in Step S51 in FIG. 15. When the result thereof is not the 'person', as it is determined that the relevant operation is not an effective key operation, the operation flow returns to Step S21, and then, a subsequent key operation is waited for.

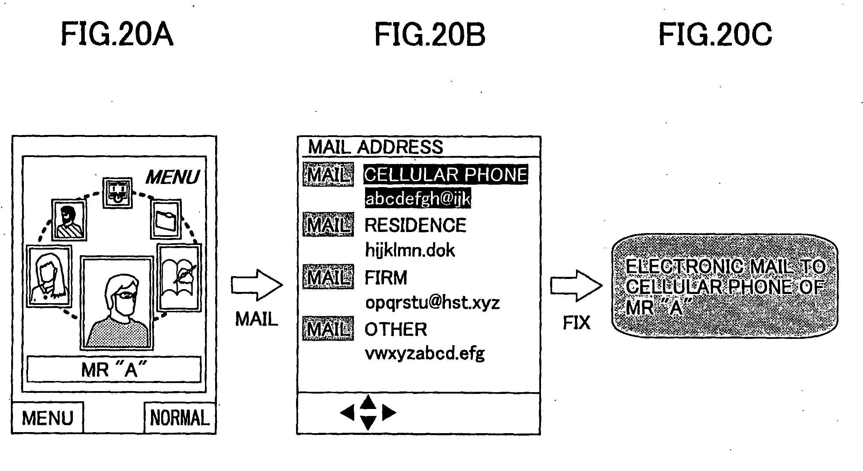

When the item attribute is the 'person' in Step S51, mail addresses of the relevant specific person are read out from the person information storage file shown in FIG. 12, and it is determined whether or not the number of the mail addresses registered there is one in Step S52. When the result thereof is more than one, a list of the mail addresses registered for the relevant specific person is displayed on the main LCD 21 in Step S53. A flow at a second line of FIG. 18 and a flow shown in FIGS. 20A, 20B and 20C show an operation flow in this case. That is, the list such as that shown in FIG. 20B is displayed, and, as a result of operation of selecting a desired mail address being performed in this state (in the state in which the mail address of the cellular phone of Mr. A is selected, in the case of the figures), the mail address of the cellular phone of Mr. A is set as a destination of an electronic mail which will be then sent out. In case where the number of the registered mail addresses is one as a result of the determination in Step S42, that mail address is set as the destination of the electronic mail to be then sent out. Then, in Step S55, electric wave is transmitted to the base station by means of the baseband processing part 3 and the radio transmission/reception part 2, and thus, operation of transmission for the relevant mail address is performed.

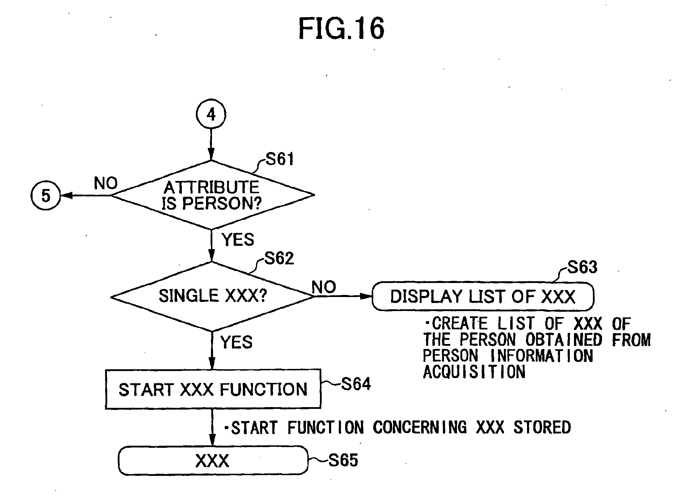

In a case where 'X key' being pressed is obtained as a result of the key determination in Step S21, operation shown in FIG. 16 is executed. In this case, the X key is a key for designating all the information registered for the relevant person, and in this case, in Step S61 in FIG. 16, the item which is in a selected state when the key is pressed is determined. Then, when the result thereof is not the 'person', as it is determined that the relevant key operation is not an effective one, the operation flow returns to Step S21, and thus, a subsequent key operation is waited for.

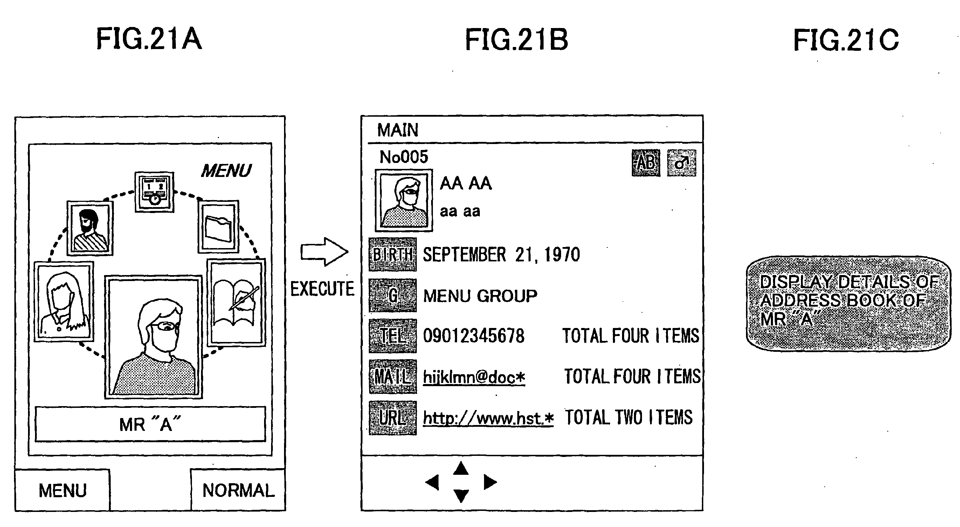

In a case where the item attribute is the 'person' in Step S61, all the information registered for the relevant person is read out from the person information storage file shown in FIG. 12, and it is determined whether or not the number of items of the information registered is one in Step S62. When the result thereof is more than one, a list of all the information registered for the relevant specific person is displayed on the main LCD 21 in Step S63. A flow at a third line of FIG. 18 and a flow shown in FIGS. 21A, 21B and 21C show an operation flow in this case. That is, the list such as that shown in FIG. 21B (in this example, the personal information list of Mr. A) is displayed, and, as a result of operation of selecting desired information being performed in this state (in the state in which an item 'AB' is selected, in the case of the figures), a breakdown of a personal address book of Mr. A is displayed.

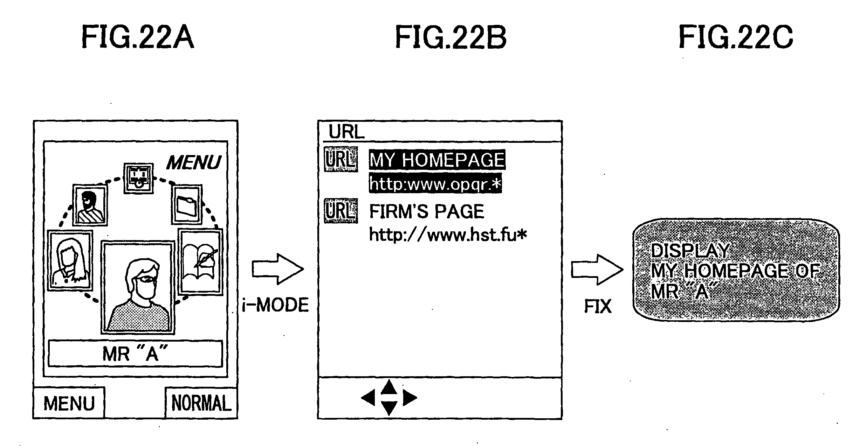

Furthermore, it is not necessary to be limited to the above-mentioned example, and, any function/action may be set, for example, when an 'i-mode key' is pressed for example, as shown in FIGS. 22A, 22B and 22C, a list of URLs concerning Mr. A is displayed, and, as a result of operation of selecting a desired URL being performed, a relevant homepage is displayed.

Thus, according to the present invention, since information representing persons can be registered as menu items, it is possible to provide operation along a thought stream of an operator for a case where the operator wishes to start an action for a specific person. Therefore, it is possible to provide a user friendly electronic device, and, thus, in case where an action is performed on a specific person, this can be achieved with easy and smooth operation.

Specified persons which can be registered in a menu as mentioned above are not limited to specific 'individuals', but, whatever identifiable, for example, specific organizations, i.e., firms, public offices or such, 'corporations', or merely 'organizations' may also be applied.

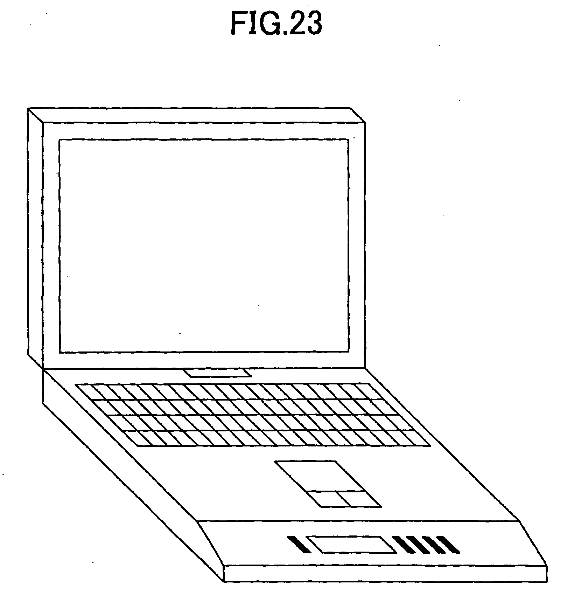

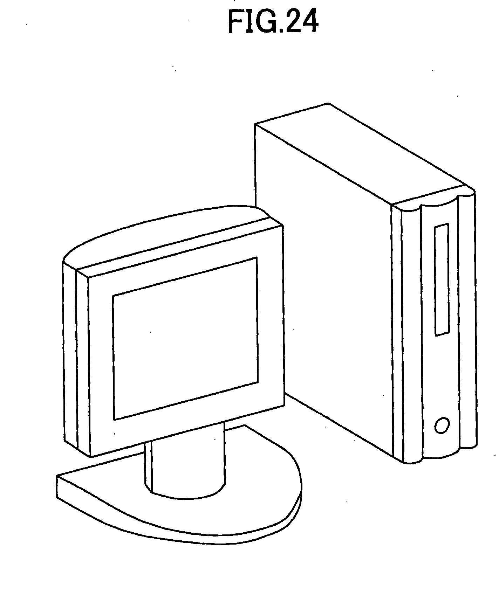

Furthermore, the present invention may be applied not only to a cellular phone, but the present invention may be widely applied to any electronic device such as a notebook-type personal computer, a desktop-type personal computer such as those shown in FIGS. 23 and 24, or such, configured to have a plurality of functions (or, a combination of a single function and a plurality of persons may also be applied) together within the single electronic device, to display them in a form of a menu or in a similar way, and to have a user who views it then select a desired function, person or such.

The present invention includes configurations described below as appendixes (Apps.):
App. 1) A device for selecting a desired item from a menu including a predetermined plurality of items, including:
   a means by which information representing a specific person is registered as each item of the above-mentioned plurality of items.
App. 2) The device as mentioned in App. 1) further including:
   a means by which a predetermined function is registered as each item of the above-mentioned plurality of items.
App. 3) The device as mentioned in App. 1) or 2), wherein:
   the specific person is one with whom communication operation is performed.
App. 4) The device as mentioned in any of Apps. 1) through 3), wherein:
   the specific person is one for whom information transmission operation is performed.
App. 5) The device as mentioned in any of Apps. 1) through 4), wherein:
   the specific person is one whom information concerning is displayed.
App. 6) The device as mentioned in any of Apps. 1) through 5), wherein:
   the above-mentioned menu is displayed on a display device of a cellular phone, and the specific person is a target for whom the above-mentioned function operation of the cellular phone is performed.
App. 7) The device as mentioned in any of Apps. 1) through 6), wherein:
   the above-mentioned menu is displayed on a display device of a personal computer, and the specific person is a target for whom the above-mentioned function operation which the personal computer has is performed.
App. 8) A method for selecting a desired item from a menu including a predetermined plurality of items, including the step of:
   registering, as each item of the above-mentioned plurality of items, information representing a specific person.
App. 9) The method as mentioned in App. 8) further including the step of:
   registering a predetermined function as each item of the above-mentioned plurality of items.
App. 10) The method as mentioned in App. 8) or 9), wherein:
   the specific person is one with whom communication operation is performed.
App. 11) The method as mentioned in any of Apps. 8) through 10), wherein:
   the specific person is one for whom information transmission operation is performed.
App. 12) The method as mentioned in any of Apps. 8) through 11), wherein:
   the specific person is one whom information concerning is displayed.
App. 13) The method as mentioned in any of Apps. 8) through 12), wherein:
   the above-mentioned menu is displayed on a display device of a cellular phone, and the specific person is a target for whom the above-mentioned function operation of the cellular phone is performed.
App. 14) The device as mentioned in any of Apps. 8) through 13), wherein:
   the above-mentioned menu is displayed on a display device of a personal computer, and the specific person is a target for whom the above-mentioned function operation which the personal computer has is performed.

## Claims

1. A device for selecting a desired item from a menu comprising a predetermined plurality of items, comprising:
a means by which information representing a specific person is registered as each item of said plurality of items.

2. The device as claimed in claim 1, wherein:
the specific person comprises one with whom communication operation is performed.

3. The device as claimed in claim 1, wherein:
the specific person comprises one for whom information transmission operation is performed.

4. A method for selecting a desired item from a menu comprising a predetermined plurality of items, comprising the step of:
registering, as each item of said plurality of items, information representing a specific person.

5. The method as claimed in claim 4, wherein:
the specific person comprises one with whom communication operation is performed.

6. The method as claimed in claim 4, wherein:
the specific persons comprises one for whom information transmission operation is performed.
